# EUROPEAN PATENT APPLICATION

(11) **EP 1 845 413 A2**
(43) Date of publication of application: **17.10.2007**
(21) Application number: 07006963.8
(22) Date of filing: 03.04.2007
(51) Int. Cl.: G03B 21/00, G03B 21/14, G03B 21/20

(54) **Projector**

(30) Priority: 03.04.2006 JP 2006102583
(71) Applicant: Funai Electric Co., Ltd., Daito-shi, Osaka 574-0013 (JP)
(72) Inventor: Yonezawa, Hideo, Daito-shi Osaka, 574-0013 (JP)
(74) Representative: Grünecker, Kinkeldey, Stockmair & Schwanhäusser Anwaltssozietät

(57) **Abstract**

An object of the present invention is to provide a projector in which the fixing of a lamp door is prevented from being hindered by heat of a lamp, and the attachment and detachment of the lamp door can be easily performed. In a projector in which the lamp door covering an opening for lamp exchange formed in a housing is attached detachably, the lamp door includes first, second and third projected parts. The first projected part has a hook formed on the lower side of a tip end portion thereof. The housing includes a first receiving part receiving the first projected part and a second receiving part receiving the second projected part. In a state where the lamp door is attached to the housing, the first projected part of the lamp door is received by an upper surface of the first receiving part of the housing, and the hook formed in this first projected part is engaged with the first receiving part. Moreover, the second projected part of the lamp door is received by an upper surface of the second receiving part of the housing, and the third projected parts are received by upper surfaces of peripheral edges of the opening of the housing.

## Description

### Background of the Invention

### Field of the Invention

The present invention relates to an attaching structure for a lamp door in a projector.

### Description of the Related Art

Generally, a projector is provided with a lamp as a light source, an image forming device such as liquid crystal and a DMD (digital micromirror device), an optical system leading light emitted from the lamp to the image forming device, a lens projecting an image formed by the image forming device on a screen, and the like, and these parts are contained in a housing. In the housing, an opening for exchanging the lamp is provided, and a lamp door covering this opening is detachably attached to the housing. Patent document 1, Japanese Utility Model Registration No. 3092161, Patent document 2, Japanese Patent Application Laid-Open No. 2004-347789, Patent document 3, Japanese Patent Application Laid-Open No. 2005-134575, and Patent document 4, Japanese Patent Application Laid-Open No. 2002-333668 describe projectors each provided with such a lamp door.

In the projector of Patent document 1, Japanese Utility Model Registration No. 3092161, one end of the lamp door is rotatably attached to the housing, and at another end, a hook to lock with a locking part of a lamp house when the lamp door is closed is provided. In the projectors in Patent document 2, Japanese Patent Application Laid-Open No. 2004-347789 and Patent document 3, Japanese Patent Application Laid-Open No. 2005-134575, hooks are provided at four points of the lamp door, and these hooks allow the lamp door to be detachably attached to the housing. In the projector in Patent document 4, Japanese Patent Application Laid-Open No. 2002-333668, a hook to lock with a locking member provided in a lamp box is provided in the lamp door.

### Summary of the Invention

As shown in the above-described patent documents, a lamp door of a conventional projector is generally detachably attached to a housing with a hook. In this case, the problem is that a deformation of the hook is caused by heat generation of the lamp. The lamp door is made of synthetic resin and the hook is provided by integral molding. Since the lamp has a very high temperature during operation of the projector, the deformation of the hook is caused by the heat from the lamp. When the hook is deformed, the locking between the hook and the housing is released, so that the lamp door may drop off, or on the contrary, the locking between the hook and the housing becomes too strong, so that the lamp door may become undetachable from the housing. Particularly, as in Patent document 4, Japanese Patent Application Laid-Open No. 2002-333668, a projector in which the lamp door is attached to the lower side of the housing has a problem in that the lamp door drops due to the deformation of the hook.

Moreover, in the structure where the lamp door is attached to the housing by the locking of the hook, in order to detach the lamp door, it is necessary to apply strong force with fingers to release the locking of the hook, or to force the lamp door open with a tool such as a screw driver, which makes working at the time of lamp exchange inconvenient.

In light of the above-described problems, an object of the present invention is to provide a projector in which the fixing of a lamp door is prevented from being hindered by heat of a lamp, and the lamp door can be easily attached and detached.

A projector according to the present invention is a projector including a housing containing a lamp for projection, in which an opening for lamp exchange is formed in a position corresponding to the lamp in a bottom wall of this housing, and a lamp door covering this opening is detachably attached to the housing, wherein the lamp door comprises a first projected part, a second projected part provided at a predetermined interval from this first projected part, and a third projected part provided on the opposite side of the first and second projected parts. The first projected part has a hook formed on the lower side of a tip end portion thereof. Moreover, the housing comprises a first receiving part receiving the first projected part, and a second receiving part receiving the second projected part. In a state where the lamp door is attached to the housing, the first projected part of the lamp door is received by an upper surface of the first receiving part of the housing, and the hook formed in the first projected part is engaged with the first receiving part. Moreover, the second projected part of the lamp door is received by an upper surface of the second receiving part of the housing, and the third projected part is received by an upper surface of a peripheral edge of the opening of the housing.

In the present invention, the first and second projected parts provided in the lamp door are received by the upper surfaces of the first and second receiving parts provided in the housing, and the third projected part provided in the lamp door is received by the upper surface of the peripheral edge of the opening of the housing, which prevents the lamp door from dropping downward. Moreover, engaging the hook formed in the first projected part with the first receiving part prevents the lamp door from coming off sideward. Therefore, the lamp door can be stably held by the housing, and the influence by heat deformation of the hook is alleviated as compared with a case where the fixing of the lamp door to the housing is all performed only by hooks as in the conventional art, and thus, the lamp door can be prevented from dropping off or becoming undetachable.

Moreover, since the hook of the first projected part in the lamp door is formed downwardly, pushing up the lamp door from beneath releases the engagement between the hook of the first projected part and the first receiving part. In this state where the engagement is released, by pulling the lamp door sideward, the lamp door can be detached from the housing, therefore, the lamp door can be easily detached by pushing up and pulling the lamp door sideward without applying strong force with fingers to release the engagement of the hook or forcing the lamp door open using a tool as in the conventional art. Thus, the working at the time of lamp exchange becomes easy.

In a preferred embodiment of the present invention, the first projected part of the lamp door is provided in a position farther from the lamp as compared with the second projected part. This makes it difficult for the hook provided in the first projected part to be influenced by the heat of the lamp, so that the deformation of the hook is prevented, and thus, stable detachment and attachment of the lamp door is enabled.

Furthermore, in a typical embodiment of the present invention, a lamp door includes a flat-plate like plate part covering an opening of a housing, and wall parts formed in part of the periphery of this plate part. Inside of the wall parts, a first projected part and a second projected part are provided at a predetermined interval, and the first projected part is provided in a position farther from the lamp as compared with the second projected part, and has a hook formed on the lower side of a tip end portion thereof. Moreover, a single or a plurality of third projected parts are provided on the opposite side of the first and second projected parts in the plate part. On the other hand, in the side wall formed on the periphery of the bottom wall, the housing comprises a first through-hole into which the first projected part is inserted, a first receiving part provided adjacent to this first through-hole, a second through-hole into which the second projected part is inserted, and a second receiving part provided adjacent to this second through-hole. In a state where the lamp door is attached to the housing, the first projected part of the lamp door which is inserted into the first through-hole of the housing is received by an upper surface of the first receiving part of the housing, and the hook formed in the first projected part engages with a side surface of the first receiving part. Moreover, the second projected part of the lamp door which is inserted into the second through-hole of the housing is received by an upper surface of the second receiving part of the housing, and the single or a plurality of third projected parts of the lamp door are received by upper surface(s) of peripheral edge(s) of the opening of the housing.

According to the present invention, the influence by the heat deformation of the hook is alleviated, so that the lamp door can be prevented from dropping off or becoming undetachable, and the lamp door can be easily detached at the time of lamp exchange.

### Brief Description of the Drawings

Fig. 1 is an exploded perspective view showing a housing and a lamp door of a projector according to an embodiment of the present invention;
Fig. 2 is a perspective view showing a state where the lamp door is attached to the housing;
Fig. 3 is an overall view of the housing with a cover attached;
Figs. 4A and 4B are enlarged perspective views of a first projected part, a first through-hole and a first receiving part;
Figs. 5A and 5B are enlarged perspective views of a second projected part, a second through-hole and a second receiving part;
Fig. 6 is an enlarged perspective view of third projected parts;
Fig. 7 is an enlarged perspective view of the third projected parts;
Fig. 8 is a cross-sectional view in the vicinity of the first projected part;
Fig. 9 is a cross-sectional view explaining the detachment of the lamp door; and
Fig. 10 is a cross-sectional view explaining the detachment of the lamp door.

### Description of the Preferred Embodiment

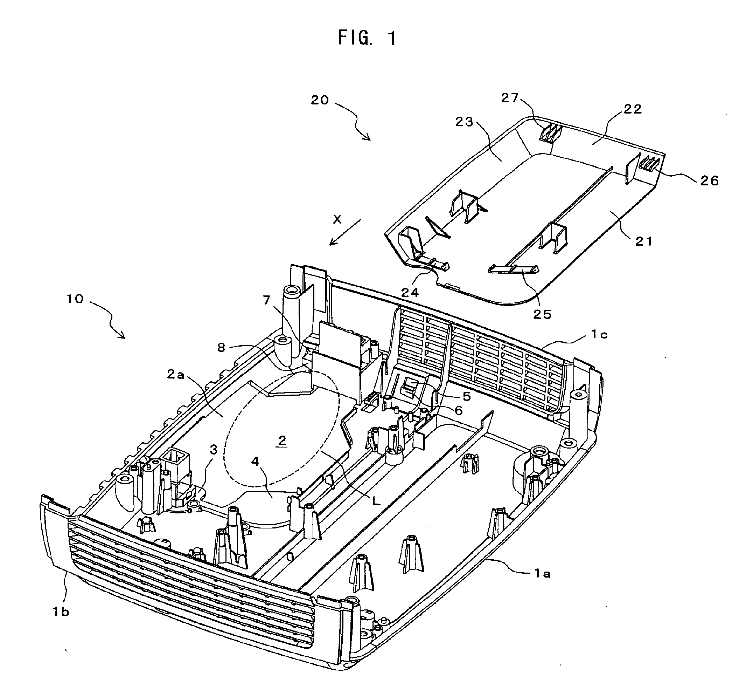

Fig. 1 is an exploded perspective view showing a housing and a lamp door of a projector according to an embodiment of the present invention. Reference numeral 10 denotes the housing of the projector, which is made of resin, and in this figure, part of the housing is shown. The housing 10 is provided with a bottom wall 1a, and side walls 1b, 1c formed on the periphery of this bottom wall 1a. In the figure, only the lower half of each of the side walls 1b, 1c is shown. Inside of the housing 10, a lamp for projection (not shown) is contained in a position indicated by broken line L of the figure. An opening 2 for lamp exchange is formed in a position corresponding to the lamp in the bottom wall 1a. Reference numeral 20 denotes the lamp door covering this opening 2, which is made of the same resin as the housing 10, and detachably attached to the housing 10 from a direction of arrow X.

The lamp door 20 is provided with a flat-plate like plate part 21 covering the opening 2, and wall parts 22, 23 formed on two sides of the periphery of this plate part 21. Inside of the wall part 22, a projected part 26 (first projected part) , and a projected part 27 (second projected part) are formed integrally at a predetermined interval. The projected part 26 is provided in a position farther from the lamp as compared with the projected part 27, and has a hook, described later, formed on lower side of a tip end portion thereof. On the other hand, in the plate part 21, a pair of projected parts 24, 25 (third projected parts) are formed integrally on the opposite side of the projected parts 26, 27. Detailed structures of the projected parts 24 to 27 will be described later.

In the side wall 1c of the housing 10, a through-hole 5 (first through-hole) into which the projected part 26 of the lamp door 20 is inserted is formed, and a wedge-shaped receiving part 6 (first receiving part) is formed adjacent to this through-hole 5. Moreover, in the side wall 1c, a through-hole 7 (second through-hole) into which the projected part 27 of the lamp door 20 is inserted is formed, and a wedge-shaped receiving part 8 (second receiving part) is formed adjacent to this through-hole 7.

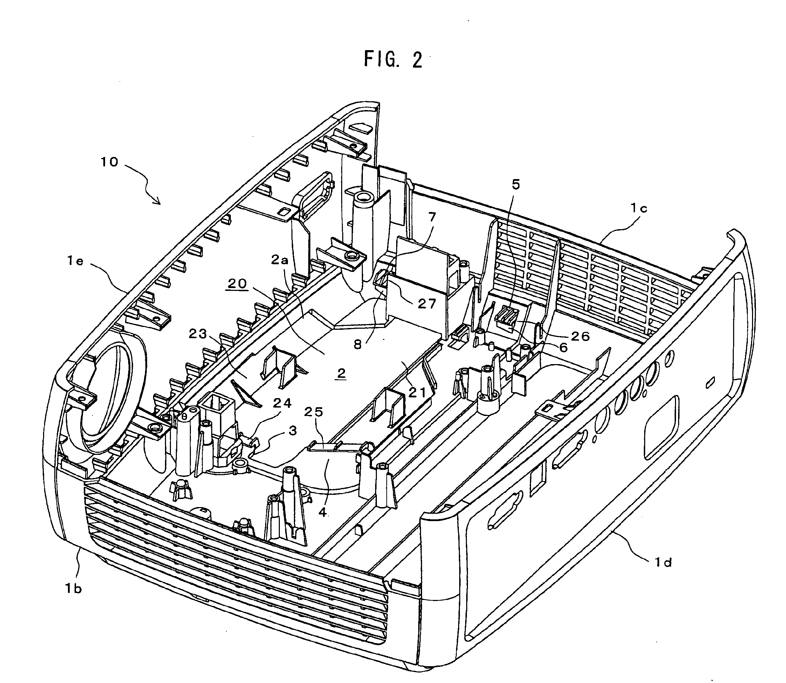

Fig. 2 is a perspective view showing a state where the lamp door 20 is attached to the housing 10. Reference numerals 1d and 1e denote side walls provided across the side walls 1b, 1c. As seen in Fig. 2, in the state where the lamp door 20 is attached, the plate part 21 of the lamp door 20 covers the opening 2 from beneath, and the wall part 23 of the lamp door 20 covers a notched part 2a continued to the opening 2. Moreover, the projected part 26 formed in the lamp door 20 is inserted into the through-hole 5 of the housing 10, and the receiving part 6 receives this projected part 26. At this time, the hook (described later) formed in the projected part 26 engages with the receiving part 6. The projected part 27 is inserted into the through-hole 7 of the housing 10, and the receiving part 8 receives this projected part 27. Furthermore, the projected part 24 formed in the lamp door 20 is received by an upper surface of a peripheral edge 3 of the opening 2, and the projected part 25 formed in the lamp door 20 is received by an upper surface of a peripheral edge 4 of the opening 2.

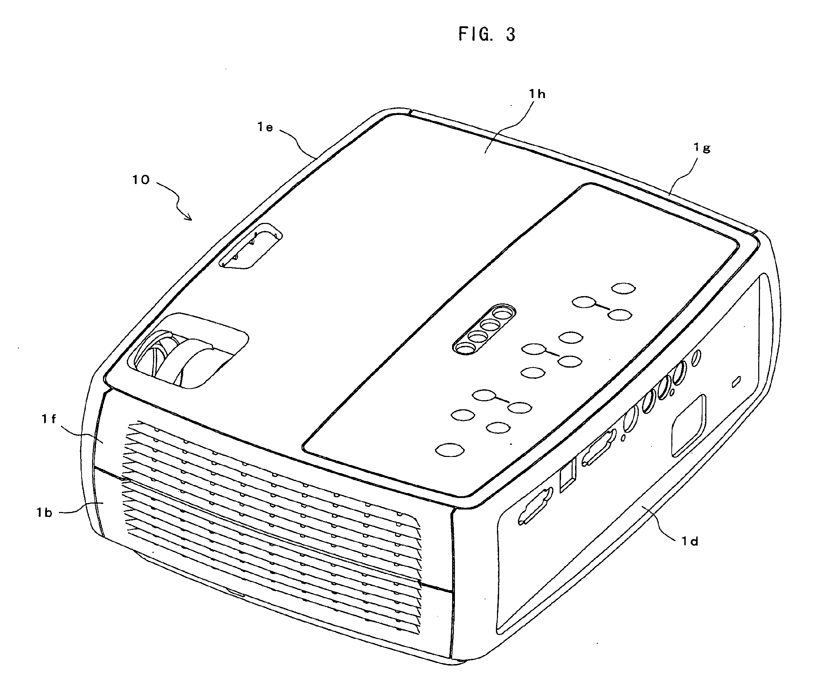

Fig. 3 shows an overall view of the housing 10 in which upper-half side walls 1f, 1g are coupled to the lower-half side walls 1b, 1c, and a cover 1h is mounted on the housing 10. Inside of this housing 10, in addition to the above-mentioned lamp, an image forming device such as a DMD, an optical system leading light of the lamp to the image forming device, a lens for projecting an image on a screen, and the like are contained.

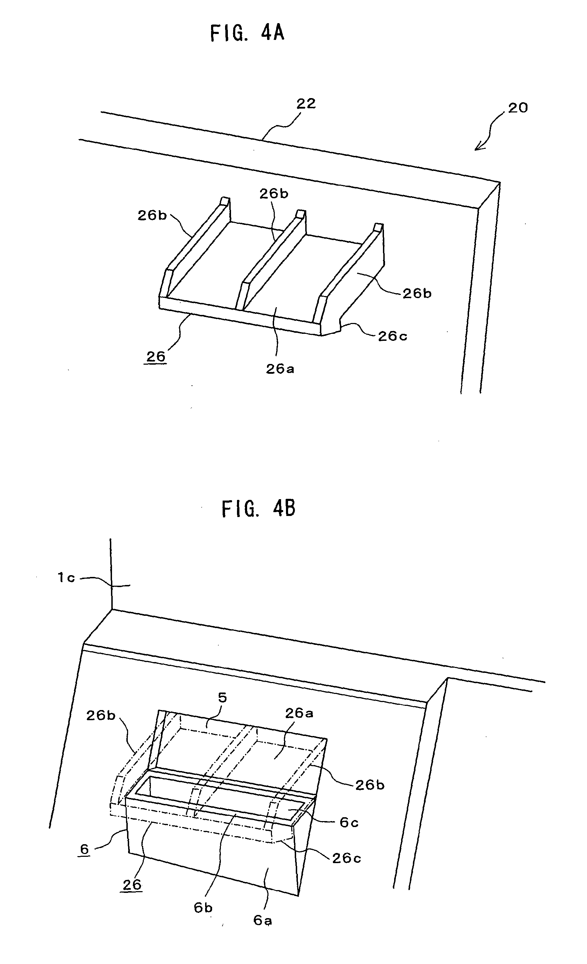

Fig. 4A is an enlarged perspective view of the projected part 26 provided in the lamp door 20, and Fig. 4B is an enlarged perspective view of the through-hole 5 and the receiving part 6 provided in the housing 10. In Fig. 4A, the projected part 26 is formed integrally with the wall part 22 of the lamp door 20, and is provided with a base portion 26a parallel to the plate part 21 (Fig. 1), three ribs 26b formed integrally with an upper surface of this base portion 26a at intervals, and a hook 26c provided on the lower side of the tip end portion of the base portion 26a. When the lamp door 20 is attached to the housing 10 as in Fig. 2, the projected part 26 is inserted into the through-hole 5, and a lower surface of the base portion 26a of the projected part 26 is supported by an upper surface 6b of the receiving part 6 as shown in Fig. 4B. Moreover, the hook 26c formed at the tip end of the projected part 26 engages with an upper end portion of a side surface 6a of the receiving part 6. Reference numeral 6c denotes a recessed portion formed in the receiving part 6. This recessed portion 6c is not essential in the present invention, and thus, may be omitted.

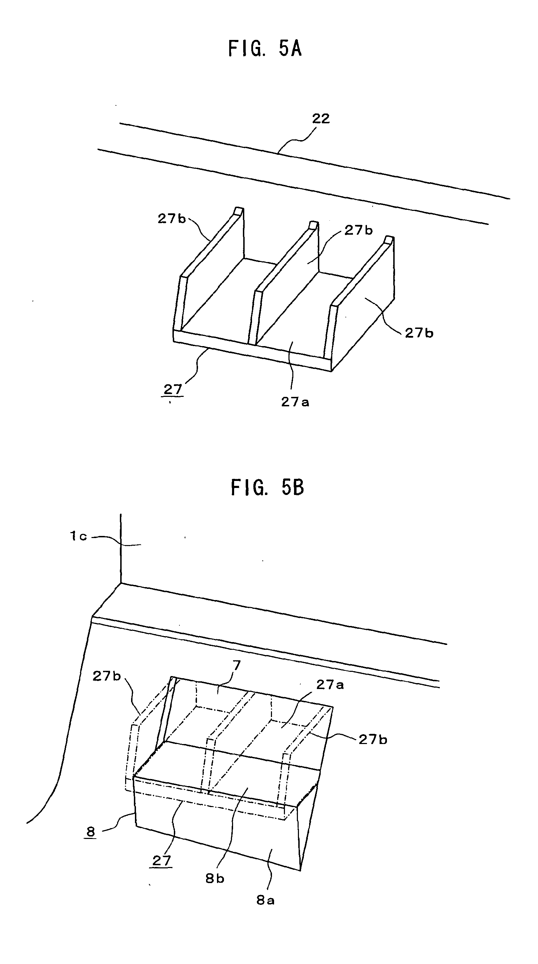

Fig. 5A is an enlarged perspective view of the projected part 27 provided in the lamp door 20, and Fig. 5B is an enlarged perspective view of the through-hole 7 and the receiving part 8 provided in the housing 10. In Fig. 5A, the projected part 27 is formed integrally with the wall portion 22 of the lamp door 20, and is provided with a base portion 27a parallel to the plate part 21 (Fig. 1), and three ribs 27b formed integrally with an upper surface of this base portion 27a at intervals. When the lamp door 20 is attached to the housing 10 as in Fig. 2, the projected part 27 is inserted into the through-hole 7, and a lower surface of the base portion 27a of the projected part 27 is supported by an upper surface 8b of the receiving part 8 as shown in Fig. 5B. In the present embodiment, since the hook 26c as in the projected part 26 is not provided in the projected part 27, the projected part 27 is only received by the receiving part 8, and does not engage with a side surface 8a of the receiving part 8.

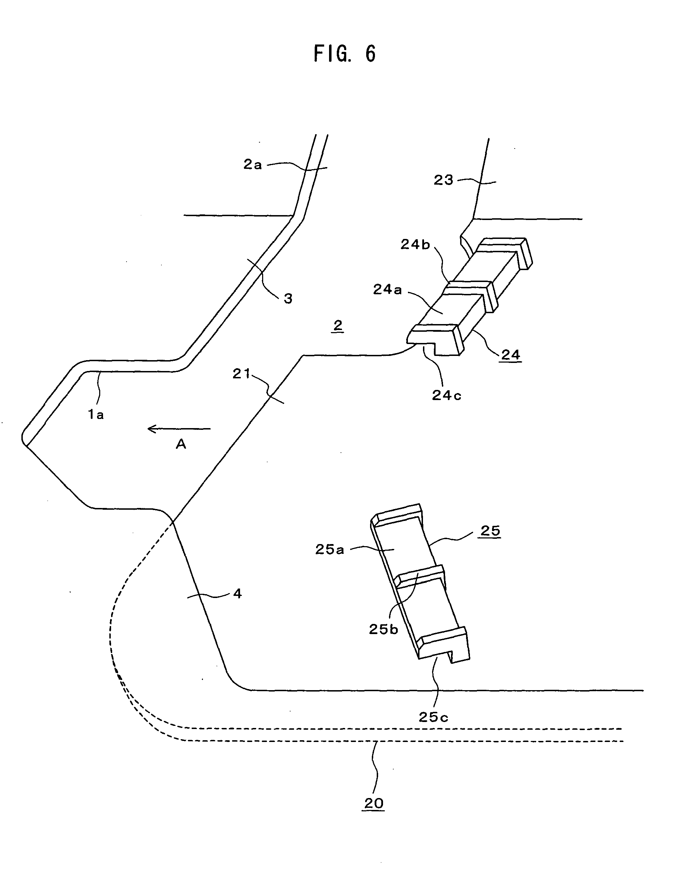

Fig. 6 is an enlarged perspective view of the projected parts 24, 25 provided in the lamp door 20. The projected part 24 is formed integrally with the plate part 21 of the lamp door 20, and is provided with a base portion 24a parallel to the plate part 21, and three ribs 24b formed integrally with an upper surface of this base portion 24a at intervals. Moreover, a groove portion 24c is provided between the base portion 24a and the plate part 21. The projected part 25 is also formed integrally with the plate part 21 of the lamp door 20, and is provided with a base portion 25a parallel to the plate part 21, and three ribs 25b formed integrally with an upper surface of this base portion 25a at intervals. A groove portion 25c is formed between the base portion 25a and the plate part 21.

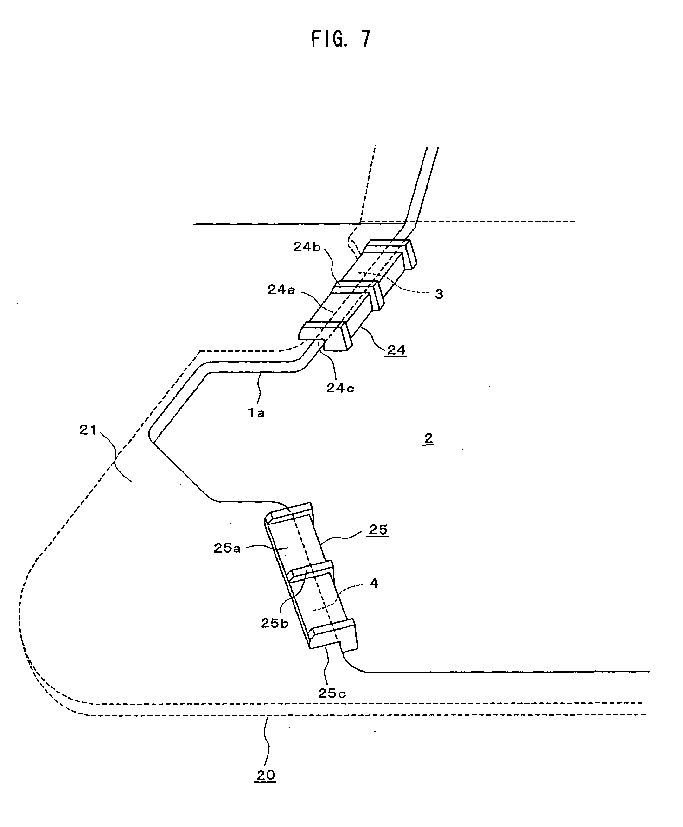

In Fig. 6, when the lamp door 20 is moved in the direction of an arrow A to fit the groove portion 24c of the projected part 24 into the peripheral edge 3 of the opening 2 in the housing 10 and fit the groove portion 25c of the projected part 25 into the peripheral edge 4 of the opening 2, the base portion 24a of the projected part 24 is supported by the upper surface of the peripheral edge 3 of the opening 2, and the base portion 25a of the projected part 25 is supported by the upper surface of the peripheral edge 4 of the opening 2 as shown in Fig. 7. This is a state shown in Fig. 2, and at this time, the projected parts 26, 27 on the opposite side of the projected parts 24, 25 are inserted into the through-holes 5, 7 and supported by the receiving parts 6, 8 as shown in Figs. 4B, 5B, respectively.

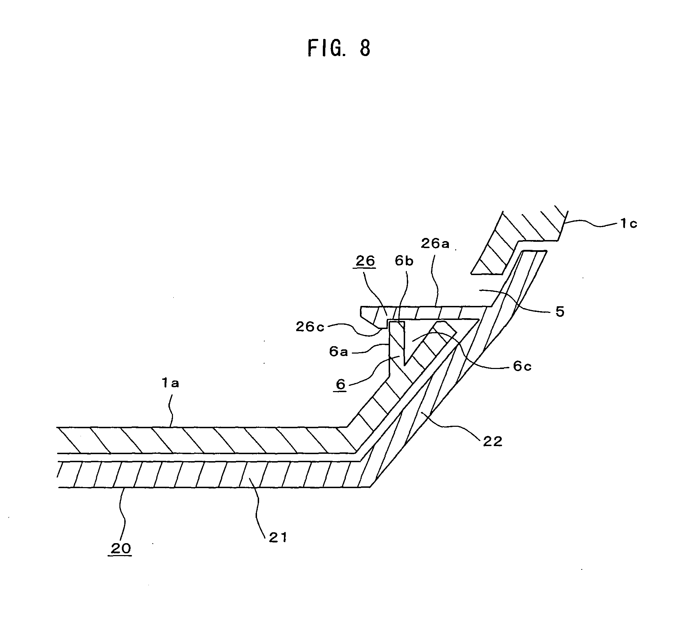

Fig. 8 is a cross-sectional view in the vicinity of the projected part 26 in the state where the lamp door 20 is attached to the housing 10. As described before, in this state, the base portion 26a of the projected part 26 is supported by the upper surface 6b of the receiving part 6, and the hook 26c formed downwardly engages with the upper end portion of the side surface 6a of the receiving part 6. This engagement of the hook 26c prevents the lamp door 20 from coming off toward the right direction in the figure.

According to the attaching structure for the lamp door 20 as described above, the projected parts 26, 27 provided in the lamp door 20 are received by the upper surfaces 6b, 8b of the receiving parts 6, 8 provided in the housing 10, and further, the projected parts 24, 25 provided in the lamp door 20 are received by the upper surfaces of the peripheral edges 3, 4 of the opening 2, which prevents the lamp door 20 from dropping downward. Moreover, the hook 26c formed in the projected part 26 engages with the side surface 6a of the receiving part 6, which prevents the lamp door 20 from coming off sideward. Therefore, the lamp door 20 can be stably held on the housing 10. Among the projected parts 24 to 27, only the projected part 26 is provided with the hook 26c, and the other projected parts 24, 25, 27 are not provided with any hook, therefore, the influence by heat deformation of the hook is alleviated as compared with a case where the fixing of the lamp door 20 to the housing 10 is all performed only by the hooks, which can prevent the lamp door 20 from dropping off or becoming undetachable.

Furthermore, since the projected part 26 having the hook 26c is provided in a position farther from the lamp as compared with the projected part 27, it becomes difficult for the hook 26c to be influenced by the heat of the lamp, so that the deformation of the hook 26c is prevented, and stable detachment and attachment of the lamp door 20 is enabled.

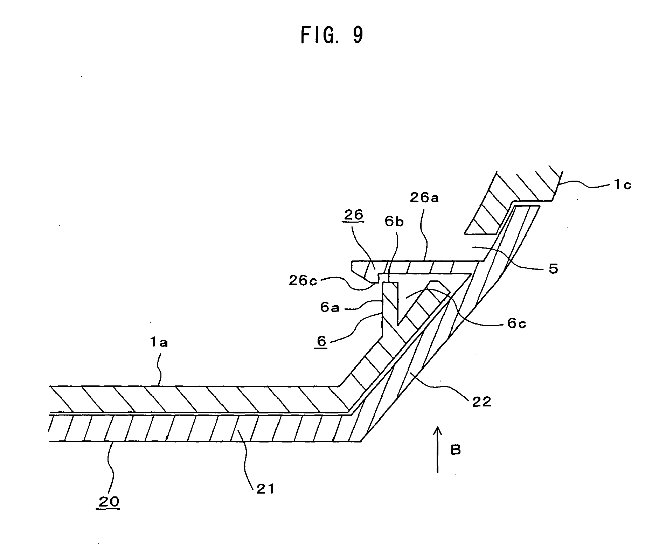

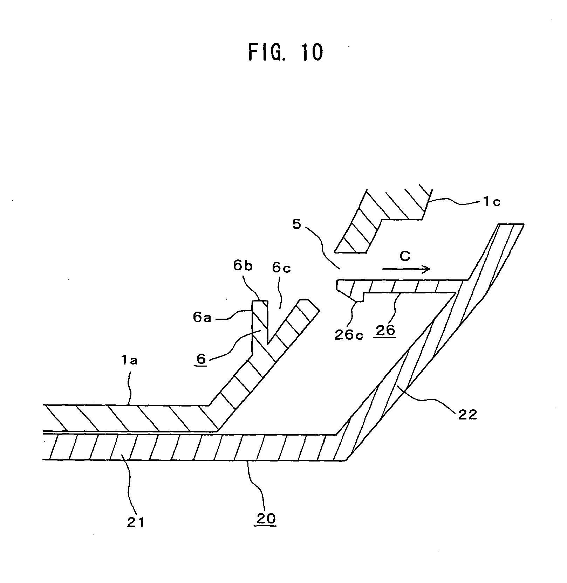

Moreover, as shown in Fig. 8, since the hook 26c of the projected part 26 is formed downwardly, in order to detach the lamp door 20 from the state of Fig. 8, pushing up the lamp door 20 in the direction of an arrow B from beneath as shown in Fig. 9 releases the engagement between the hook 26c and the receiving part 6. Moreover, as described before, since the projected part 27 is only received by the upper surface 8b of the receiving part 8, and the projected parts 24, 25 are also only received by the upper surfaces of the peripheral edges 3, 4 of the opening 2, by pulling the lamp door 20 in the direction of an arrow C as shown in Fig. 10 in the state where the engagement of the hook 26c of the projected part 26 is released, the lamp door 20 can be detached from the housing 10. Therefore, the lamp door 20 can be easily detached by pushing up and pulling the lamp door 20 sideward without applying strong force with fingers to release the engagement of the hook or forcing the lamp door open using a tool such as a screw driver as in the conventional art. Thus, the working at the time of lamp exchange becomes easy.

While in the above-described embodiment, the hook 26c of the projected part 26 is engaged with the side surface 6a of the receiving part 6, the hook 26c may be engaged with a notched part or a recessed part (illustration is omitted) formed in the receiving part 6.

Moreover, while in the above-described embodiment, the hook 26c is provided only in the projected part 26, a hook similar to the hook 26c can also be provided in the projected part 27. In this case, the dropping-off of the lamp door 20 can be more surely prevented.

Furthermore, in the above-described embodiment, since the pair of projected parts 24, 25 is provided on the opposite side of the projected parts 26, 27, the lamp door 20 is supported by the housing 10 at a total of four points, so that a stable attachment state can be realized. The projected parts 24, 25, however, may be integrated.

## Claims

1. A projector comprising a housing containing a lamp for projection, in which an opening for lamp exchange is formed in a position corresponding to the lamp in a bottom wall of this housing, and a lamp door covering this opening is detachably attached to said housing, wherein:
said lamp door comprises a flat-plate like plate part covering the opening of said housing, and wall parts formed in part of the periphery of this plate part;
inside of said wall parts, a first projected part and a second projected part are provided at a predetermined interval, the first projected part being provided in a position farther from the lamp as compared with the second projected part, and having a hook formed on the lower side of a tip end portion thereof;
a single or a plurality of third projected parts are provided on the opposite side of the first and second projected parts in said plate part;
in the side wall formed on the periphery of said bottom wall, said housing comprises a first through-hole into which said first projected part is inserted, a first receiving part provided adjacent to this first through-hole, a second through-hole into which said second projected part is inserted, and a second receiving part provided adjacent to this second through-hole; and
in a state where said lamp door is attached to said housing, the first projected part of the lamp door which is inserted into said first through-hole is received by an upper surface of said first receiving part, said hook formed in the first projected part engages with a side surface of the first receiving part, the second projected part of the lamp door which is inserted into said second through-hole is received by an upper surface of said second receiving part, and the single or a plurality of third projected parts of the lamp door are received by upper surfaces of peripheral edges of said opening.

2. A projector comprising a housing containing a lamp for projection, in which an opening for lamp exchange is formed in a position corresponding to the lamp in a bottom wall of this housing, and a lamp door covering this opening is detachably attached to said housing, wherein:
said lamp door comprises a first projected part, a second projected part provided at a predetermined interval from this first projected part, and a third projected part provided on the opposite side of the first and second projected parts;
said first projected part has a hook formed on the lower side of a tip end portion thereof;
said housing comprises a first receiving part receiving said first projected part, and a second receiving part receiving said second projected part; and
in a state where said lamp door is attached to said housing, the first projected part of the lamp door is received by an upper surface of said first receiving part, and said hook formed in the first projected part is engaged with first receiving part, the second projected part of the lamp door is received by an upper surface of said second receiving part, and the third projected part of the lamp door is received by an upper surface of a peripheral edge of said opening.

3. The projector according to claim 2,
wherein said first projected part is provided in a position farther from the lamp as compared with the second projected part.
